Europäisches Patentamt

European Patent Office

Office européen des brevets

(11) Publication number: **0 204 407 B1**

## EUROPEAN PATENT SPECIFICATION

(45) Date of publication of patent specification: **17.07.91**  (51) Int. Cl.⁵: **G01B 5/20**

(21) Application number: **86302872.6**

(22) Date of filing: **17.04.86**

(54) Profile gauge.

(30) Priority: **26.04.85 GB 8510730**

(43) Date of publication of application:
**10.12.86 Bulletin 86/50**

(45) Publication of the grant of the patent:
**17.07.91 Bulletin 91/29**

(84) Designated Contracting States:
**DE FR GB IT**

(56) References cited:
**GB-A- 931 463**
**US-A- 2 615 256**

(73) Proprietor: **Vitrex Limited**
**Kilnhouse Lane**
**Lytham St. Annes Lancashire FY8 3DU(GB)**

(72) Inventor: **Harrington, Patrick Walter**
**29 Brookhill Close**
**New Barnet Hertfordshire EN4 8SH(GB)**

(74) Representative: **Attfield, Donald James et al**
**BROOKES, MARTIN & WILSON Prudential**
**Buildings 5 St. Philip's Place**
**Birmingham B3 2AF(GB)**

## Description

The invention relates to a profile transferring device commonly known as a profile gauge for enabling the contour of a profile to be reproduced.

Various forms of such profile gauges are known, the most successful one in use being much the same as that described in GB - PS 931 463 and shown in Figs. 1 and 2 of the accompanying drawings, which are respectively a top perspective view and cross-section of the known gauge. It consists of a multitude of equally long straight stainless steel rods A projecting from a sheet metal housing B with both ends and clamped side by side in one plane between a friction member C and at least one bearing surface D in the housing so that they can be forced to slide lengthwise at right angles to the housing B. In the as-sold construction, the housing B consists of two sheet metal stampings E and F held together by end caps G. When the gauge is applied to a profile with the tips of the rods at one end pushed into contact with the profile, the rods will slide against the friction exerted by the parts C and D so that the tips together assume the counterpart of the contour of the profile whilst the opposite ends of the rods will define a replica of the contour. The gauge can then be taken away to wherever the contour of the profile is to be reproduced, for example to a floor tile or carpet which is to be cut out to fit a complex architrave shape.

Although the known profile gauge is most useful, it exhibits certain disadvantages which complicate its production and use. First, the rods A have to be of metal to avoid bending, but metal is apt to scratch or otherwise damage a profile to which the gauge is applied with a push force. Second, it will be evident that the friction exerted on the rods A by the parts C and D and by the sheet metal stampings E and F where the rods leave the housing should be light to minimise the resistance on the rods A to longitudinal sliding. Otherwise, impossibly high forces would be necessary to push the tips of the steel rods into contact with a profile and damage of the profile is even more likely to occur. On the other hand, the friction on the rods is desired to be high so as to avoid accidental displacement of the rods after the gauge has been withdrawn from the profile, especially whilst the contour is being transferred from the gauge to a workpiece. A happy compromise to make the frictional forces suit both functions is most difficult to achieve in practice.

Next, it is desirable that all the rods A be clamped in the housing with substantially the same pressure but, again, this is practically impossible to achieve with the known construction. Before the housing B is assembled, the sheet metal stampings E and F are longitudinally bowed so that a force has to be exerted on the ends of the stampings to bring them together and to secure them with the end caps G. In this way it is hoped that the frictional forces exerted on the rods A near the end caps G will be the same as on the rods near mid-length of the housing so that some of the rods will not be loose whilst others are clamped too tight. Unless the production facilities are very sophisticated, and therefore costly, to enable one to work to close tolerances, equal pressures on the rods are, however, practically impossible to achieve.

Another disadvantage is that, in use, the tips of adjacent stainless steel rods A very easily ride onto each other instead of remaining side by side in one plane, thereby increasing the danger of marking the profile quite apart from preventing an accurate reproduction of the counterpart of the contour to be obtained.

An important drawback in the manufacture of the known profile gauge is that it is enormously difficult, and therefore costly, to assemble. A multitude of rods A first has to be cleanly cropped to accurate lengths without leaving sharp edges or burrs and the correct number of rods has to be counted out and then laid side by side between the bearing surface D and friction member C without overlapping whilst being clamped in the housing B. A single rod too many or too few or out of place will render the gauge virtually inoperative. What is more, the rod material is frequently distorted before it is cut to length and therefore the rods may not be as straight as is required.

Another prior profile gauge is disclosed in US-PS 2615256. A stack of elongated plate-like contour indicating fingers are mounted in side by side parallel relationship on a plate-like mounting bar. Each of the fingers has a longitudinally extending slot through which the mounting member projects. The slots are wider than the bar is thick, providing clearance so that the fingers shall move freely longitudinally with respect to the bar and with respect to each other. The bar extends laterally outwardly beyond the stack of fingers and carries a pair of cooperating clamping elements at its opposite ends. One of the clamping elements is operated by a cam-acting locking lever, such that when the locking lever is in its operative position the fingers are compressed between the clamping elements and pressed against each other, thereby locking them against longitudinal movement. In use, the gauge is held perpendicularly to the profile, with the locking lever in its inoperative position and the fingers free to move. The fingers are then manipulated so that an end of each finger contacts the profile. Finally the cam lever is turned to its locking position to lock the fingers against further movement. This profile gauge is difficult to use satisfactorily as will be explained below.

The invention has been based on the aforementioned considerations and aims to avoid the aforementioned disadvantages with a profile gauge of cheaper and yet sturdy construction.

According to the invention a profile gauge comprises a multitude of equally long elongate members carried side by side in juxtaposition by a common carrier member with the opposite ends of each elongate member projecting from the carrier member and the tips of both opposite ends exposed for contact with a profile, each elongate member being a longitudinally slotted blade and the carrier member being narrower than the slots are long and engaged through all the slots of the blades so that each blade is longitudinally slidable on the carrier member, characterised in that the blades are of resilient plastics material, there is an interference fit between the slots of the blades and the carrier member and each blade is individually sprung onto the carrier member and independently biased into frictional contact with the carrier member consequent on the interference fit and the resilience of the plastics material, such that each blade is longitudinally slidable against the frictional force of the frictional contact when the tips of the blades are pressed against a profile but held in position against displacement by the said frictional force in the absence of forces acting longitudinally on the blades.

By means of the invention, therefore, a fundamental change is proposed to be made to the construction of the known profile gauge of GB-PS 931463. There is no longer a housing and friction member clamped onto a multitude of rods, different rods being liable to different frictional forces depending on their position along the housing. Instead, slotted elongate members in the form of blades are each individually and independently biased into frictional contact with a carrier, e.g. in the form of a plate, on which they can slide, the frictional contact being provided by the resilience of the blades, so that the latter can actually be sprung onto the carrier.

Also by means of the invention a basic change is proposed to the construction of the known profile gauge of US-PS 2615256. In place of fingers mounted on the carrier bar with clearance between the slot sides and the carrier plate to ensure that the fingers shall be able to move freely while they are manipulated into contact with the profile, the profile gauge of the invention has blades of resilient plastics material, individually sprung onto the carrier and independently biased into frictional contact with it. Each blade is movable individually when pressed against the profile and is held in position by the frictional forces against undesired movement: this obviates the need, as compared to the prior proposal, of having to manipulate the fingers to abut the profile and of having to turn the locking lever (whilst taking good care to prevent accidental displacement of the fingers prior to locking). And of course there is no need, in the profile gauge of the invention, to provide clamping elements, which add to expense and bulk and are vulnerable to damage.

In one form of the invention, the carrier is a flat rigid plate of metal of even thickness throughout, and to ensure that each blade is sprung onto the plate its slot contains a constriction at which the slot width is less than the plate thickness. This constriction may be formed by one or more pimples or pips projecting into the slot from one or each slot side. Alternatively, one or each side of the slot is tapered towards the mid-length of the slot. Or again, the constriction may be formed by flats at mid-length of each blade.

Ideally, the coefficient of friction between adjacent blades should be less, preferably considerably less, than that between the blades and the carrier. This is best achieved if the blades are moulded from acetal and the carrier is made from aluminium alloy.

It has been found that, apart from curing some of the defects of known profile gauges, the profile gauge according to the invention also brings about some unexpected advantages. For example, it is now readily possible to make variously long profile gauges by simply providing a carrier, i.e. a cheap aluminium alloy plate, of the appropriate length. For the known profile gauges of GB-PS 931463, if they were to be of different lengths, differently long housing pressings (and the tools for making same) had to be provided; in any case a practical limit was set to their length by the fact that equal pressures had to be exerted on the stainless steel rods by the housing and friction member and this cannot be achieved even on a hit and miss basis except when the gauge is short. Since each slotted blade in the construction of the invention is independently biased onto the carrier, it does not really matter how long the carrier might be and therefore how many blades are threaded on it.

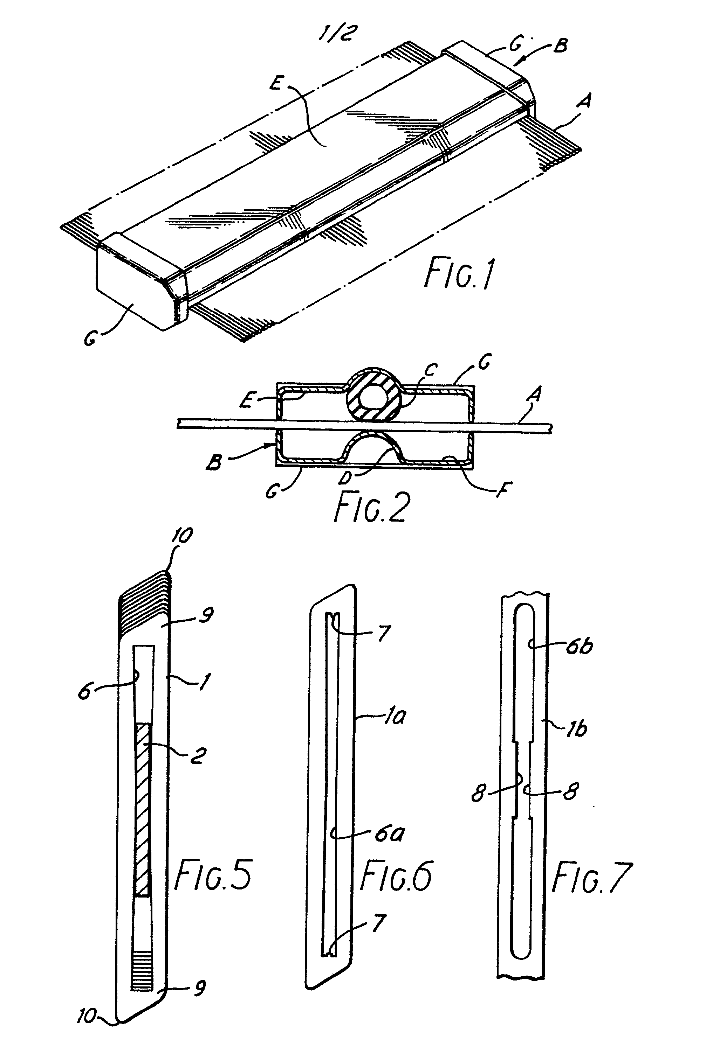

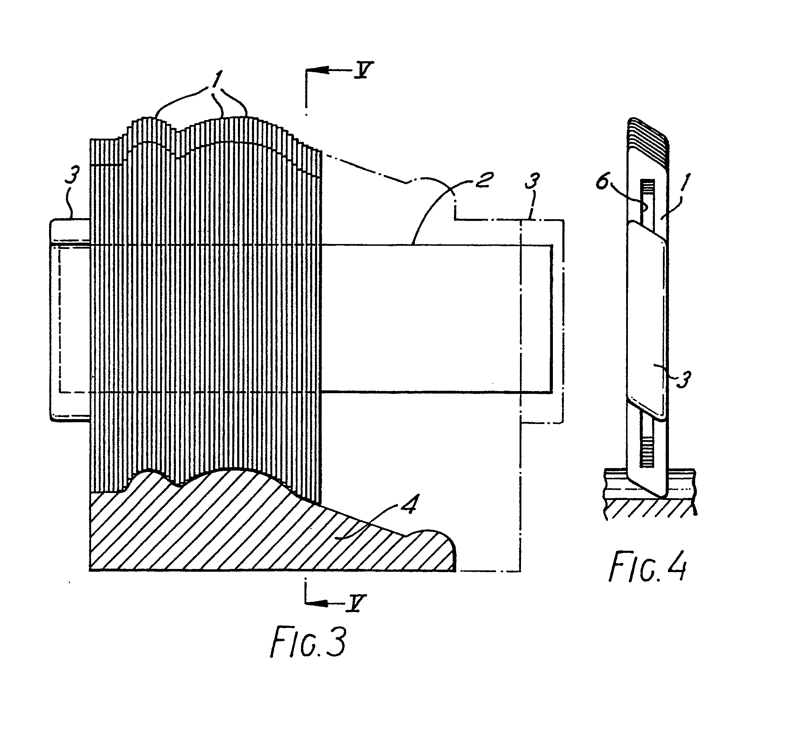

Whereas the known profile gauge of GB-PS 931 463 cannot be laid flat on a workpiece with the tips of the rods touching the workpiece (because, as is evident from Fig. 1, the tips will always be raised from the workpiece by about half the thickness of the housing from which the rods project), it is now possible to avoid a space between the tips of the blades and the work, as will become clearer from the following description of preferred examples with reference to the additional figures of the accompanying drawings, wherein:

Fig. 3 is a fragmentary side elevation of a profile gauge embodying the invention held against a profile which is shown in cross-section;

Fig. 4 is an end elevation of the Fig. 3 gauge;

Fig. 5 is a section through the gauge taken on the line V-V in Fig. 3;

Fig. 6 is an end view on a modified blade of the gauge; and

Fig. 7 is a fragmentary end view of another modified blade.

The profile gauge of Figs. 3 - 5 comprises a multitude of equally long juxtaposed slotted elongate members in the form of plastics blades 1 which are independently biased into frictional contact with, and longitudinally slidable with respect to, a common carrier in the form of a flat rigid metal plate 2 of even thickness throughout which engages through all the slots and carries end caps 3 for retaining the blades on the plate. In Fig. 3, the profile gauge is shown applied to a profile 4, a counterpart of the contour of this profile being defined by the lower ends of the blades and a replica of the contour being reproduced by the upper ends of the blades. The thinner the blades, the more accurately will the contour be reproduced. By way of example, blades having a length of about 106 mm and a thickness of about 1.5 mm will facilitate a reasonably accurate reproduction of contours as may be required bay a do-it-yourself handyman and yet give the blades sufficient strength.

The bias of the blades 1 into frictional contact with the plate 2 is provided by the resilience of the plastics material of the blades which are sprung onto the plate.

For this purpose, the slot 6 in each blade is at least partially narrower than the plate thickness, in the illustrated case by containing a central constriction formed by markedly tapering sides bounding the slot, as shown especially in Fig. 5. During assembly of each blade on the plate, therefore, the material bounding the sides of the slot has to be flexed slightly apart, whereby this material is pre-stressed. Note that the ends of the slot 6 are markedly wider than the plate 2 is thick so that, if the blade is longitudinally displaced to its limit in either direction, the plate 2 will not become wedged in the end of the slot.

A similar biasing effect as in the blade construction of Fig. 5 could be obtained if constrictions in a slot with straight sides are formed at least substantially mid-length of the slot by one or more pimples or pips projecting into the slot. In a further modification (see Fig. 6), the slot sides 6a in blade 1a taper towards mid-length by only about 0° 10' and jamming of the plate at the ends of the slots is prevented by pimples 7 at the ends.

In the Fig. 7 embodiment, the constriction in slot 6b of blade 1b is defined by flats 8, which may be about 20 mm long for slots of 90 mm length co-operating with a blade of about 38 mm in width. The longer the constriction, the narrower can be the plate (or the longer the slot) and hence the longer the maximum relative movement between blade and plate.

For best results, the coefficient of surface friction between adjacent blades of the gauge should be less than the friction between each blade and the carrier plate 2. This is preferably achieved by moulding the blades from acetal and making the plate of aluminium alloy.

It will be seen that, contrary to the known construction of GB-PS 931463, the profile gauge described above can be laid flat on a work surface with part of the contour-defining ends of the blades closely approaching the work. It is preferred to make the blades of substantially parallelogram shape as illustrated, namely with the outer edge of the ends 9 (Fig. 5) inclined with respect to the length of the blades to form tips 10.

Many modifications may be made to the construction and its variants described above without departing from the scope of the invention as defined in the claims. Thus, for example, the sides of the slots could be parallel and the plate slightly curved in cross-section to provide an interference fit producing the necessary frictional forces, or indeed the carrier member could be an aluminium alloy extrusion for example of I-section engaging in slots that taper outwards from the centre.

## Claims

1.  A profile gauge comprising a multitude of equally long elongate members carried side by side in juxtaposition by a common carrier member with the opposite ends of each elongate member projecting from the carrier member and the tips of both opposite ends exposed for contact with a profile, each elongate member being a longitudinally slotted blade and the carrier member being narrower than the slots are long and engaged through all the slots of the blades so that each blade is longitudinally slidable on the carrier member, characterised in that the blades (1, 1a, 1b) are of resilient plastics material, there is an interference fit between the slots (6) of the blades and the carrier member (2) and each blade is individually sprung onto the carrier member and independently biased into frictional contact with the carrier member consequent on the interference fit and the resilience of the plastics material, such that each blade is longitudinally slidable against the frictional force of the frictional contact when the tips (10) of the blades are pressed against a profile (4) but held in position against displacement by the said frictional force in the absence of forces acting longitudinally on the blades.

2. A profile gauge according to claim 1, wherein the carrier is a plate (2).

3. A profile gauge according to claim 1 or claim 2, wherein the carrier is a rigid metal plate (2) of even thickness throughout.

4. A profile gauge according to claim 3, wherein the plate (2) is of aluminium alloy.

5. A profile gauge according to any preceding claim, wherein the blades (1, 1a, 1b) are made from acetal.

6. A profile gauge according to any preceding claim, wherein the slot (6) in each blade (1, 1a, 1b) contains a constriction at which the slot width is less than the thickness of the carrier (2).

7. A profile gauge according to claim 6, wherein the constriction is defined by one or more pimples or pips projecting into the slot.

8. A profile gauge according to claim 6, wherein the constriction is defined by the sides (6a) bounding the slot (6) converging towards mid-length.

9. A profile gauge according to claim 6, wherein the constriction is defined by confronting flats (8) on the slot sides (6b).

## Revendications

1. Jauge de profil comprenant un grand nombre d'éléments allongés de même longueur portés dans une disposition de juxtaposition côté à côte par un élément de support commun de façon que les extrémités opposées de chaque élément allongé sortent de l'élément de support et que les bouts des deux extrémités opposées soient dégagés pour venir en contact avec un profil, chaque élément allongé étant constitué par une lame fendue longitudinalement et l'élément de support étant plus étroit que la longueur des fentes et s'engageant à travers toutes les fentes des lames de façon que chaque lame puisse glisser longitudinalement sur l'élément de support, jauge caractérisée en ce que les lames (1, 1a, 1b) sont en matière plastique élastique, en ce qu'il existe un emboîtement de serrage entre les fentes (6) des lames et l'élément de support (2), et en ce que chaque lame est individuellement emboîtée élastiquement sur l'élément de support et se trouve poussée independamment en contact de frottement avec l'élément de support du fait de l'emboîtement de serrage et de l'élasticité de la matière plastique, de façon que chaque lame puisse glisser longitudinalement contre la force de friction du contact de frottement lorsque les bouts (10) des lames sont pressés contre un profil (4), mais soit maintenue en place contre tout déplacement par la force de frottement en l'absence de forces agissant longitudinalement sur les lames.

2. Jauge de profil selon la revendication 1, caractérisée en ce que l'élément de support est une plaque (2).

3. Jauge de profil selon l'une quelconque des revendications 1 et 2, caractérisée en ce que l'élément de support est une plaque métallique rigide (2) d'épaisseur uniforme sur toute sa longueur.

4. Jauge de profil selon la revendication 3, caractérisée en ce que la plaque (2) est en alliage d'aluminium.

5. Jauge de profil selon l'une quelconque des revendications précédentes, caractérisée en ce que les lames (1, 1a, 1b) sont réalisées en acétal.

6. Jauge de profil selon l'une quelconque des revendications précédentes, caractérisée en ce que la fente (6) de chaque lame (1, 1a, 1b) comporte un resserrement à l'endroit duquel la largeur de la fente est inférieure à l'épaisseur du support (2).

7. Jauge de profil selon la revendication 6, caractérisée en ce que le resserrement est forme par un ou plusieurs boutons ou points faisant saillie dans la fente.

8. Jauge de profil selon la revendication 6, caractérisée en ce que le resserrement est obtenu en faisant converger les côtés (6a) limitant la fente (6) vers le milieu de la longueur de cette fente.

9. Jauge de profil selon la revendication 6, caractérisée en ce que le resserrement est formé par des méplats opposes (8) sur les cotes (6b) de la fente.

## Patentansprüche

1. Profilschablone, die eine Vielzahl gleich langer länglicher Teile aufweist, die Seite an Seite nebeneinanderliegend von einen gemeinsamen Trägerteil getragen werden, wobei die entgegengesetzten Enden jedes länglichen Teiles aus dem Tragteil hervorstehen und die Spitzen der beiden entgegengesetzten Enden bloßgelegt sind, um mit einem Profil in Berührung zu treten, wobei jedes längliche Teil ein der Länge nach geschlitztes Blatt ist und das Tragteil schmäler ist als die Schlitze lang sind und durch all die Schlitze der Blätter hindurchgeführt ist, so daß jedes Blatt der Länge nach auf dem Tragteil verschiebbar ist, dadurch gekennzeichnet, daß die Blätter (1, 1a, 1b) aus elastischem Plastikmaterial bestehen, ein Festsitz zwischen den Schlitzen (6) der Blätter und dem Tragteil (2) besteht und jedes Blatt einzeln auf das Tragteil schnappend aufgebracht ist und in Reibungskontakt mit dem Tragteil als Folge des Reibfestsitzes und der Elastizität des Plastikmaterials derart unabhängig vorgespannt ist, daß jedes Blatt in Längsrichtung entgegen der Reibungskraft des Reibungskontaktes verschiebbar ist, wenn die Spitzen (10) der Blätter gegen ein Profil (4) gepreßt werden, aber in Abwesenheit von Kräften, die der Länge nach auf die Blätter wirken, durch diese Reibungskraft gegen eine Verschiebung in Position gehalten werden.

2. Profilschablone nach Anspruch 1, wobei der Träger eine Platte (2) ist.

3. Profilschablone nach Anspruch 1 oder 2, wobei der Träger eine starre Metallplatte (2) von überall gleicher Dicke ist.

4. Profilschablone nach Anspruch 3, wobei die Platte (2) aus einer Aluminiumlegierung ist.

5. Profilschablone nach einem der vorhergehenden Ansprüche, wobei die Blätter (1, 1a, 1b) aus Acetal hergestellt sind.

6. Profilschablonhe nach einem der vorhergehenden Ansprüche, wobei die Schlitze (6) in Jedem Blatt (1, 1a, 1b) eine Verengung enthalten, an der die Schlitzbreite geringer ist als die Dicke des Trägers (2).

7. Profilschablone nach Anspruch 6, wobei die Verengung von ein oder mehreren Pickeln oder Zacken definiert wird, die sich in den Schlitz hineinerstrecken.

8. Profilschablone nach Anspruch 6, wobei die Verengung von den den Schlitz (6) begrenzenden Seiten (6a) definiert wird, die auf die Mitte der Länge zu konvergieren.

9. Profilschablone nach Anspruch 6, wobei die Verengung von gegenüberstehenden Flächen (8) auf den Schlitzseiten (6b) definiert wird.

1/2

FIG.1

FIG.2

FIG.5

FIG.6

FIG.7

FIG. 3

FIG. 4